# EUROPÄISCHE PATENTSCHRIFT

(11) **EP 2 313 742 B1**
(45) Veröffentlichungstag und Bekanntmachung des Hinweises auf die Patenterteilung: **16.11.2016**
(21) Anmeldenummer: 09777031.7
(22) Anmeldetag: 08.07.2009
(51) Int. Cl.: G01C 21/34, G06Q 10/00, G06Q 10/04

(54) **VERFAHREN UND VORRICHTUNG ZUM BEREITSTELLEN VON NAVIGATIONSDATEN, NAVIGATIONSGERÄT**
METHOD AND DEVICE FOR PROVIDING NAVIGATIONAL DATA, NAVIGATIONAL DEVICE
PROCÉDÉ ET DISPOSITIF POUR FOURNIR DES DONNÉES DE NAVIGATION, APPAREIL DE NAVIGATION

(30) Priorität: 18.07.2008 DE 102008033907
(43) Veröffentlichungstag der Anmeldung: 27.04.2011
(73) Patentinhaber: Deutsche Post AG, 53113 Bonn (DE)
(72) Erfinder: HÖHNE, Gerit, Susann, 07778 Dornburg-Camburg (DE); PRANTZ, Uwe, 01445 Radebeul (DE)
(74) Vertreter: Jostarndt Patentanwalts-AG
(86) Internationale Anmeldenummer: PCT/EP2009/004932
(87) Internationale Veröffentlichungsnummer: WO 2010/006726

(56) Entgegenhaltungen:
- EP-A2- 1 288 622
- DE-A1- 19 651 146
- GB-A- 2 364 800

## Beschreibung

### Technisches Gebiet

Die Erfindung bezieht sich auf das Gebiet von Navigationshilfen. Insbesondere betrifft die Erfindung ein Verfahren zum Bereitstellen von Navigationsdaten für ein Navigationsgerät sowie eine Vorrichtung zum Bereitstellen von Navigationsdaten, die zur Durchführung des Verfahrens geeignet ist.

### Hintergrund der Erfindung

Navigationsgeräte unterstützen den Nutzer dabei, sich zu einem vorgegebenen Navigationsziel zu bewegen. Hierzu enthalten Navigationsgeräte in der Regel eine Einrichtung zur Positionsbestimmung, die ein satellitengestütztes Ortungssystem nutzt. Ferner weisen die Navigationsgeräte eine Einrichtung auf, die eine optimierte Route von der aktuellen Position zu dem vorgegebenen Navigationsziel ermittelt. Diese Einrichtung greift auf Kartendaten zu, die das verfügbare Wegenetz beschreiben, auf dem sich der Nutzer zu dem Navigationsziel bewegen kann. Um den Nutzer entlang der ermittelten Route zu führen, werden üblicherweise akustische oder optische Navigationshinweise ausgegeben. Ferner kann die Route visuell auf einer Karte dargestellt werden. Navigationsgeräte mit derartigen Funktionalitäten können in ein Fahrzeug des Nutzers integriert oder als portable Geräte ausgeführt sein, die der Nutzer mit sich führt. DE 10031834 A1 offenbart dabei ein Verfahren und eine Vorrichtung zur automatischen Routenplanung für ein Fahrzeug, welches eine Mehrzahl von Bestimmungsorten zum Abliefern und/oder Abholen von Objekten anzufahren hat. Es erfolgen ein Erfassen des jeweiligen Bestimmungsortes der Objekte mit einer Erfassungseinrichtung und ein automatisches Erstellen einer Planroute mit einer sequentiellen Reihenfolge der Bestimmungsorte unter Verwendung der erfassten Bestimmungsort-Identifizierungseinrichtungen gemäß mindestens einem vorbestimmten Kriterium durch eine Routenplanungseinrichtung. WO 2005/100917 offenbart ein Verfahren sowie eine Vorrichtung zur störungsfreien und zeitoptimierten Beförderung einer beliebigen Zahl an Objekten. Hier wird den Objekten jeweils mindestens eine Beförderungsadresse zugeordnet, wobei eine Reihenfolge für die Beförderung der Objekte zu den Beförderungsorten ermittelt wird, wobei mehrere Objekte für eine gemeinsame Beförderung zusammengestellt werden, wobei die Beförderungsadressen entsprechend der ermittelten Reihenfolge in einen Datenspeicher eines Beförderungsmittels eingegeben werden, wobei die Daten so an ein Navigationssystem des Beförderungsmittels übermittelt werden, dass ermittelt wird, an welchem Beförderungsort eine nachfolgende Beförderung der Objekte erfolgen soll und wobei das Navigationssystem des Beförderungsmittel eine wegoptimierte Route zu dem Beförderungsort für die nachfolgende Beförderung ermittelt

Bekannte Navigationsgeräte ermöglichen es dem Nutzer, eine optimierte Route von einem Startort zu einem Zielort zu ermitteln. Hierbei kann es sich - in der Regel nach Wahl des Nutzers - beispielsweise um die kürzeste oder schnellste Route handeln. Oftmals besteht bei Nutzern von Navigationssystemen jedoch der Wunsch, eine optimierte Mehrstopproute mit mehreren Zwischenzielen ermitteln zu können.

### Darstellung der Erfindung

Es ist eine Aufgabe der vorliegenden Erfindung, einen Nutzer bei der Navigation entlang einer mehrere Zwischenziele enthaltenen Mehrstopproute zu unterstützen.

Diese Aufgabe wird durch ein Verfahren mit den Merkmalen des Patentanspruchs 1, durch eine Vorrichtung mit den Merkmalen des Patentanspruchs 10 und durch ein Navigationssystem nach dem Patentanspruch 14 gelöst. Ausführungsformen des Verfahrens und der Vorrichtung sind in den abhängigen Ansprüchen angegeben.

Gemäß einem ersten Aspekt der Erfindung wird ein Verfahren zum Bereitstellen von Navigationsdaten für ein Navigationsgerät vorgeschlagen. Das Verfahren umfasst die folgenden Schritte:
- Empfangen einer Mehrzahl von Adressdaten in einer zentralen Servereinrichtung über ein Datennetzwerk,
- Ermitteln einer Reihenfolge von den Adressdaten entsprechenden Ortsdaten in der Servereinrichtung derart, dass eine Route, die an einem Startort beginnt, an einem Zielort endet und durch die Ortsdaten bestimmte Orte in der Reihenfolge enthält, ein vorgebendes Kriterium erfüllt, wobei für die in der Route enthaltenen Orte zumindest teilweise eine Ankunftszeit bestimmt wird und bei der Ermittlung der Ankunftszeiten Aufenthaltsdauern an den auf der Route vorangegangenen Orten berücksichtigt werden, wobei die Aufenthaltsdauern von einem Nutzer vorgegeben werden, und die Berechnung der Reihenfolge von den eingegebenen Aufenthaltsdauern abhängig gemacht wird,
- Absenden eines Datensatzes, welcher die Ortsdaten unter Angabe der ermittelten Reihenfolge enthält, zur Übertragung an das Navigationsgerät.

Nach einem zweiten Aspekt der Erfindung wird eine Vorrichtung zum Bereitstellen von Navigationsdaten für ein Navigationsgerät vorgeschlagen. Die Vorrichtung umfasst:
- eine Empfangskomponente, die dazu ausgebildet ist, eine Mehrzahl von Adressdaten über ein Datennetzwerk zu empfangen,
- eine Sequenzierungskomponente, die dazu ausgebildet ist, eine Reihenfolge von den Adressdaten entsprechenden Ortsdaten zu ermitteln, derart, dass eine Route, die an einem Startort beginnt, an einem Zielort endet und durch die Ortsdaten bestimmte Orte in der Reihenfolge enthält, ein vorgegebenes Kriterium erfüllt, und die dazu ausgebildet ist, für die in der Route enthaltenen Orte zumindest teilweise eine geschätzte Ankunftszeit zu bestimmen und bei der Ermittlung der geschätzten Ankunftszeiten von einem Nutzer vorgegebene Aufenthaltsdauern an den auf der Route vorangegangenen Orten zu berücksichtigen, wobei die Berechnung der Reihenfolge von den eingegebenen Aufenthaltsdauern abhängig gemacht wird
- eine Ausgangskomponente, die dazu ausgebildet ist, einen Datensatz zur Übertragung an das Navigationsgerät abzusenden, wobei der Datensatz die Ortsdaten unter Angabe der ermittelten Reihenfolge enthält.

Die Erfindung ermöglicht es, eine Mehrstopproute in einer Servereinrichtung berechnen zu lassen, die in einem Datensatz an ein Navigationsgerät des Nutzers übertragen werden kann. Hierdurch wird die Planung einer Mehrstopproute mit mehreren Zwischenzielen in einfacher Weise möglich. Die Route umfasst einen Startort und einen Zielort, deren Adressdaten vorzugsweise an die Servereinrichtung übertragen werden und zur Unterscheidung von den Zwischenzielen entsprechend markiert sind. Ferner umfasst die Route mehrere Zwischenziele. Entsprechend des vorgegebenen Kriteriums kann zur Ermittlung der Reihenfolge beispielsweise die kürzeste, schnellste oder wirtschaftlichste Route bestimmt werden.

Das Navigationsgerät umfasst dabei:
- eine Navigationskomponente, die dazu ausgebildet ist, eine Position des Navigationsgeräts zu bestimmen und eine Route zu einem Navigationsziel zu ermitteln,
- eine Eingangskomponente, die dazu ausgebildet ist, einen Datensatz einzulesen, der Ortsdaten von Navigationszielen unter Angabe einer Reihenfolge der Ortsdaten enthält und die Routendaten zu extrahieren, wobei die Routendaten Aufenthaltsdauern an den auf der Route vorangegangenen Orten umfassen, wobei die Reihenfolge eine gemäß einem Verfahren nach einem der Ansprüche 1 bis 9 ermittelte Reihenfolge ist.
- eine mit der Eingangskomponente und der Navigationskomponente gekoppelte Steuerungskomponente, die dazu ausgebildet ist, Ortsdaten eines Ortes an die Navigationskomponente zu übergeben, nachdem der in der Reihenfolge vorangegangene Ort erreicht worden ist.

Die Verwendung eines derartigen Navigationsgeräts im erfindungsgemäßen Verfahren beziehungsweise in der erfindungsgemäßen Vorrichtung hat den Vorteil, dass ein Datensatz, welcher eine Mehrstopproute beschreibt, automatisch eingelesen, und aufgrund der sukzessiven Übergabe der Ortsdaten an die Navigationskomponente vollständig entlang einer Mehrstopproute navigiert werden kann, die außerhalb des Navigationsgeräts ermittelt worden ist. Damit eignet sich das Navigationsgerät besonders dazu, entlang einer optimierten Route zu navigieren, die in der zuvor beschriebenen Vorrichtung bzw. nach dem zuvor beschriebenen Verfahren ermittelt worden ist.

Die von der Servereinrichtung bereitgestellten und in dem Navigationsgerät eingelesenen Ortsdaten umfassen vorzugsweise Geokoordinaten. Damit wird insbesondere gewährleistet, dass die Ortsdaten dazu verwendet werden können, mittels des Navigationsgeräts an den gewünschten Ort zu navigieren - auch wenn die Adresse innerhalb des Navigationsgeräts nicht gespeichert ist bzw. nicht geokodiert werden kann. Dies kann beispielsweise bei einer veralteten Datenbasis des Navigationsgeräts oder bei einer fehlerhaften Adressangabe der Fall sein. Gleichfalls können die Ortsdaten jedoch auch Adressdaten umfassen.

Eine Ausführungsform des Verfahrens sieht vor, dass in den Adressdaten enthaltene Adressen mit gültigen Adressen verglichen werden, die in einer mit der Servereinrichtung verbundenen Datenbank gespeichert sind, und dass die den Adressdaten entsprechenden Ortsdaten Geokoordinaten der Adresse umfassen, wenn die Adresse gültig ist.

In einer entsprechenden Ausgestaltung umfasst die Vorrichtung eine Validierungskomponente, die dazu ausgebildet ist, in den Adressdaten enthaltene Adressen mit gültigen Adressen in einer Datenbank zu vergleichen, sowie eine mit der Validierungskomponente gekoppelte Geokodierungskomponente, die dazu ausgestaltet ist, den Geokoordinaten einer Adresse als den Adressdaten entsprechende Ortsdaten zu bestimmen, wenn die Adresse gültig ist.

Die Validierung der Adressen anhand der Datenbank gültiger Adressen stellt sicher, dass nachfolgend Geokoordinaten für die Adresse ermittelt werden können. Dies ist erforderlich, um anhand der Geokoordinaten die optimierte Route ermitteln zu können, welche die den Adressen entsprechenden Orte enthält, und um die Routenführung in dem Navigationsgerät ohne Beeinträchtigungen durchführen zu können, die etwa aufgrund einer unzulänglichen Geokodierung entstehen können.

Ferner sieht eine Ausgestaltung des Verfahrens vor, dass eine korrigierte Adresse bestimmt wird, wenn eine in den Adressdaten enthaltene Adresse nicht gültig ist, und dass die den Adressdaten entsprechenden Ortsdaten Geokoordinaten der korrigierten Adresse enthalten.

In einer entsprechenden Ausgestaltung der Vorrichtung ist vorgesehen, dass die Validierungskomponente dazu ausgebildet ist, eine korrigierte Adresse zu bestimmen, wenn eine in den Adressdaten enthaltene Adresse nicht gültig ist, und dass die Geokodierungskomponente dazu ausgestaltet ist, die Geokoordinaten der korrigierten Adresse als den Adressdaten entsprechende Ortsdaten zu bestimmen.

Hierdurch wird eine Korrektur fehlerhafter Adressen ermöglicht. Diese geschieht vorzugsweise vor der Ermittlung der optimalen Route, welche die den Adressen entsprechenden Orte enthält, so dass eine problemlose Routenermittlung möglich ist. Dadurch, dass die Adresskorrektur bereits bei der Bearbeitung der Navigationsziele vorgenommen wird, bevor die Ortsdaten an das Navigationsgerät übermittelt werden, wird zudem vermieden, dass dieses aufgrund einer fehlerhaften oder unvollständigen Adresse keine Route zu dem gewünschten Ort ermitteln kann.

In vielen Fällen ist eine eindeutige automatische Korrektur einer fehlerhaften Adresse nicht möglich, d.h. es kann nicht ermittelt werden, welche korrekte Adresse anstelle der ungültigen Adresse angegeben werden sollte. Daher beinhaltet eine Weiterbildung des Verfahrens und der Vorrichtung, dass die Bestimmung der korrigierten Adresse eine Interaktion mit einem Nutzer umfasst, insbesondere eine Auswahl der korrigierten Adresse aus einer Mehrzahl von Adressen durch den Nutzer.

Die Interaktion mit dem Nutzer erfolgt vorzugsweise über eine Nutzerschnittstelle, die über das Datennetzwerk an einem Endgerät des Nutzers bereitgestellt wird. Insbesondere kann die Nutzerschnittstelle als eine Webseite ausgestaltet sein, die an dem Endgerät dargestellt und von dem Endgerät aus bedient werden kann. Zur Auswahl der Adresse stehen vorzugsweise mehrere gültige Adressen zur Verfügung, die als Korrektur in Betracht kommen - beispielsweise aufgrund eines vorgegebenen Maßes an Ähnlichkeit zu der korrigierten Adresse.

Das Verfahren ist unter anderem dadurch gekennzeichnet, dass für die in der Route enthaltenen Orte zumindest teilweise eine Ankunftszeit bestimmt wird und bei der Ermittlung der Ankunftszeiten Aufenthaltsdauern an den auf der Route vorangegangenen Orten berücksichtigt werden, wobei die Aufenthaltsdauern von dem Nutzer vorgegeben werden.

Die entsprechende Vorrichtung beinhaltet, dass die Sequenzierungskomponente dazu ausgebildet ist, für die in der Route enthaltenen Orte zumindest teilweise eine geschätzte Ankunftszeit zu ermitteln und bei der Ermittlung der geschätzten Ankunftszeiten von einem Nutzer vorgegebene Aufenthaltsdauern an den auf der Route vorangegangenen Orten zu berücksichtigen.

Die Ermittlung der geschätzten Ankunftszeiten hat den Vorteil, dass der Nutzer abschätzen kann, wann er die in der Route enthaltenen Orte voraussichtlich erreicht. Vorteilhaft werden zur Schätzung der Ankunftszeit Aufenthaltsdauern der vorangehenden Orte berücksichtigt, wobei die Aufenthaltsdauern von dem Nutzer angegeben werden können. Hierzu können von dem Nutzer insbesondere Zeitdauern für die Aufenthalte spezifiziert werden oder Stopptypen, die jeweils mit einer bestimmten Zeitdauer verknüpft sind.

Darüber hinaus werden zur Ermittlung der Ankunftszeit vorzugsweise Geschwindigkeiten auf den Streckabschnitten der Route zwischen den Orten herangezogen. Dies können beispielsweise vorgegebene Durchschnittsgeschwindigkeiten sein.

In einer Ausführungsform des Verfahrens und der Vorrichtung ist vorgesehen, dass der Datensatz von der Servereinrichtung an eine von dem Nutzer angegebene elektronische Adresse gesendet wird.

Dies stellt eine besonders hohe Einfachheit, Nutzerfreundlichkeit und Flexibilität bei der Übermittlung des Datensatzes sicher. Bei der elektronischen Adresse kann es sich insbesondere um eine E-Mail-Adresse handeln.

Das Navigationsgerät kann beispielsweise als ein Smartphone ausgestaltet sein, mit dem an die E-Mail-Adresse gesendete Daten abgerufen werden können. Gleichfalls können die Daten jedoch auch mit einem anderen Endgerät des Nutzers empfangen und von diesem zu dem Navigationsgerät übertragen werden.

Eine Ausgestaltung des Verfahrens sieht darüber hinaus vor, dass eine Eingangskomponente des Navigationsgeräts den Datensatz einliest und wenigstens die enthaltenen Ortsdaten extrahiert und die angegebene Reihenfolge der Ortsdaten ermittelt.

Durch ein derartiges automatisiertes Einlesen des Datensatzes wird der Komfort für den Nutzer gesteigert. Insbesondere muss der Nutzer die in dem Datensatz enthaltenen Daten nicht manuell in das Navigationsgerät eingeben. Der Datensatz ist zu diesem Zweck vorzugsweise in einem Datenformat ausgeführt, welches plattformübergreifend interpretiert werden kann.

Ferner beinhaltet eine Ausführungsform des Verfahrens, dass eine Steuerungskomponente des Navigationsgeräts die in dem Datensatz enthaltenen Ortsdaten sukzessive an eine Navigationskomponente des Navigationsgeräts übergibt, wobei die Navigationskomponente jeweils eine Route zu dem durch die Ortsdaten festgelegten Ort bestimmt.

Hierdurch wird auch die Routenführung entlang der optimierten Route durch das Navigationsgerät automatisiert und damit für den Nutzer vereinfacht. Insbesondere wird die Routenführung entlang einer optimierten, mehrere Orte umfassenden Route in Navigationsgeräten automatisiert, die nicht über eine eigene Funktionalität zur Ermittlung einer derartigen optimierten Route verfügen.

Eine weitere Ausgestaltung des Verfahrens sieht vor, dass Ortsdaten eines Ortes an die Navigationskomponente übergeben werden, nachdem der in der Reihenfolge vorangegangene Ort erreicht worden ist.

Nachdem sich das zuvor beschriebene Navigationsgerät im erfindungsgemäßen Verfahren beziehungsweise in der erfindungsgemäßen Vorrichtung vorteilhaft dazu nutzen lässt, entlang einer optimierten Route zu navigieren, die in der beschriebenen Vorrichtung ermittelt worden ist, wird gemäß einem weiteren Aspekt der Erfindung ein Navigationssystem zur Routenführung entlang einer Route mit Zwischenzielen vorgeschlagen. Das Navigationssystem umfasst eine erfindungsgemäße Vorrichtung der zuvor beschriebenen Art sowie ein Navigationsgerät.

In einem derartigen System erfolgt eine Aufteilung der enthaltenen Funktionalität auf die Vorrichtung und das Navigationsgerät. Der Vorteil, die im Zusammenhang mit der Vorrichtung beschriebenen Funktionalitäten aus dem Navigationsgerät auszugliedern, besteht insbesondere darin, dass in einem Navigationsgerät keine Ressourcen für diese Funktionalitäten vorgesehen werden müssen.

Die Vorrichtung wird vorzugsweise zentral betrieben und kann von mehreren Nutzern genutzt werden. Eine in der Vorrichtung zentral durchgeführte Adressvalidierung und Geocodierung hat zudem den Vorteil, dass Aktualisierungen der erforderlichen Datenbasis einfacher durchgeführt werden können als eine Aktualisierung der Datenbasis der Navigationsgeräte einer Mehrzahl von Nutzern.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: ein schematisches Blockdiagramm eines Systems zum Bereitstellen von Navigationsdaten für ein Navigationsgerät in einer Ausführungsform,
- Fig. 2: ein schematisches Blockdiagramm eines Webservers des in der Figur 1 dargestellten Systems in einer Ausgestaltung, und
- Fig. 3: ein schematisches Blockdiagramm des Navigationsgeräts des in der Figur 2 dargestellten Systems in einer Ausgestaltung.

### Ausführliche Beschreibung von Ausführungsbeispielen

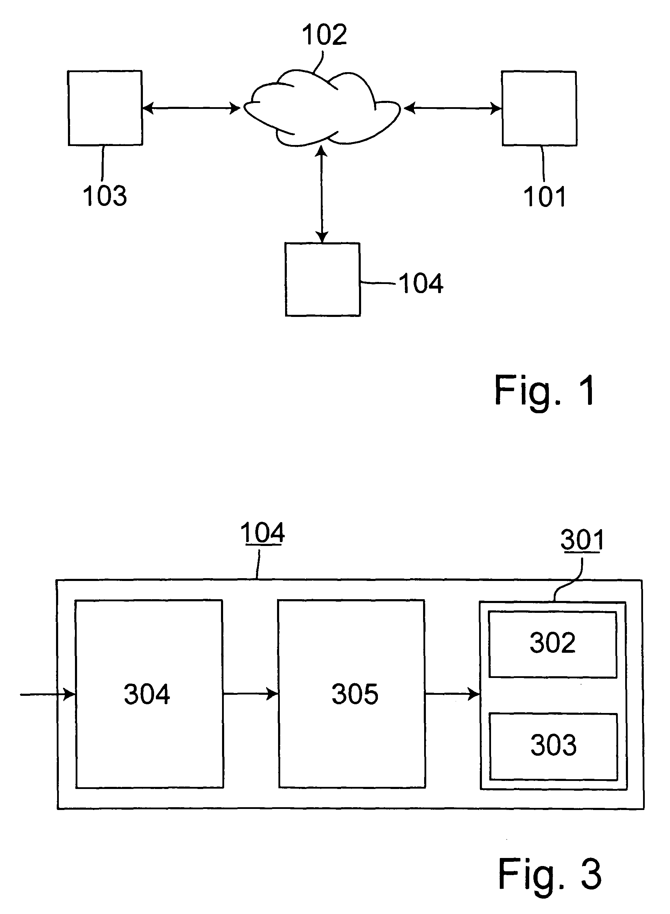

In Figur 1 ist in einem schematischen Blockdiagramm ein System dargestellt, in dem ein Dienst zur Planung einer Mehrstopproute bereitgestellt wird. Zur Ausführung des Dienstes ist ein Webserver 101 vorgesehen, der mit einem Kommunikationsnetzwerk 102, wie beispielsweise dem Internet, verbunden ist. Nutzer können auf den Dienst über das Kommunikationsnetzwerk 102 zugreifen, und die Ausgabe von Dienstresultaten erfolgt vorzugsweise ebenfalls über das Kommunikationsnetzwerk 102.

Mittels des Endgeräts 103 eines Nutzers wird eine Zielliste an den Webserver 101 übertragen, die von dem Webserver 101 bearbeitet wird. Dies umfasst die Ermittlung von Geokoordinaten zu den in der Liste enthaltenen Navigationszielen, und die Ermittlung einer Reihenfolge, in der die Ziele entlang einer optimalen Route besucht werden können. Die entsprechend dieser Reihenfolge sortierte Liste wird dann von dem Webserver 101 an das Navigationsgerät 104 übermittelt, das die Routenführung zu den Zielen vornimmt. Für die hierzu erforderlich Positionsermittlung nutzt das Navigationsgerät vorzugsweise ein satellitengestütztes Ortungssystem, wie das GPS (Global Positioning System) oder das System GALILEO.

Vorzugsweise ist der von dem Webserver 101 bereitgestellte Dienst als ein so genannter Webservice ausgeführt, der über eine zugeordnete Adresse innerhalb des Kommunikationsnetzwerks 102 zugänglich ist. Als Schnittstellen zu dem Nutzer werden in einer Ausgestaltung Webseiten bereitgestellt. In einer Ausgestaltung ist für den Zugriff auf den Webservice eine Nutzerauthentifizierung erforderlich. Hierbei lässt der Webserver 101 einen Zugriff auf den Dienst nur nach einer erfolgreichen Prüfung der Autorisierung eines Nutzers zu, was anhand einer Nutzerkennung und eines zugeordneten geheimen Passworts oder anhand anderer dem Fachmann bekannter Authentifizierungsmittel vorgenommen wird. Ferner können registrierten Nutzern auch Benutzerkonten zugeordnet sein, in denen die Nutzer beispielsweise Adresslisten speichern oder weitere Einstellungen dauerhaft vornehmen können.

Der Nutzer verwendet ein Endgerät 103, das über eine zumindest temporäre Verbindung mit dem Kommunikationsnetzwerk 102 verfügt, um auf den von dem Webserver 101 ausgeführten Dienst zuzugreifen. Zum Aufrufen und Darstellen der von dem Webserver 101 bereitgestellten Webseiten verfügt das Endgerät über eine Browsersoftware. Ferner umfasst das Endgerät 103 eine Anzeigeeinrichtung, die insbesondere eine Anzeige der Webseiten ermöglicht, sowie eine Eingabeeinrichtung, mit der insbesondere die Browsersoftware von dem Nutzer bedient werden kann. In einer Ausgestaltung handelt es sich bei dem Endgerät um einen PC (Personal Computer) oder ein Notebook des Nutzers. Gleichfalls können jedoch auch andere Endgeräte eingesetzt werden, wie beispielsweise ein Mobiltelefon, PDA (Personal Data Assistant), Smartphone oder dergleichen.

Die mittels des Endgeräts 103 an den Webserver 101 übermittelte Zielliste umfasst einen Startort, der den Startpunkt der Route markiert, sowie einen Zielort, an dem die Route enden soll. Die übrigen Ziele entsprechen Punkten, an denen Zwischenstopps eingelegt werden sollen. Die Ziele werden vorzugsweise anhand von postalischen Adressen angegeben, da diese die übliche Beschreibung von Orten darstellen. Die Adressen enthalten typischerweise Angaben zur Straße und Hausnummer sowie zu dem Ort. Optional kann zusätzlich auch eine Postleitzahl angegeben werden. Ferner kann für die Adressen in einer Ausgestaltung auch der Name einer Person oder Firma angegeben werden, wodurch die Zuordnung für den Nutzer erleichtert wird.

In einer Ausführungsform werden die Adressen in dem Endgerät 103 des Nutzers in ein Dokument mit einem vorgegebenen Datenformat eingebracht, das von dem Endgerät 103 über das Kommunikationsnetzwerk auf den Webserver 101 hochgeladen wird. Dies kann beispielsweise über eine Funktionalität einer Webseite erfolgen, die von dem Webserver 101 zu diesem Zweck bereitgestellt wird. Bei dem Dokument kann es sich beispielsweise um ein CSV-Dokument handeln (CSV: Comma-Separated Values), oder es kann ein anderes vorgegebenes Format verwendet werden. Innerhalb des Endgeräts 103 können die Adressen beispielsweise aus einer vorhandenen Adressdatenbank exportiert werden, beispielsweise einer Kundendatenbank.

Start- und Zieladresse werden in dem Dokument kenntlich gemacht, beispielsweise indem die Startadresse als erste Adresse der Liste und die Zieladresse als letzte Adresse der Liste aufgeführt wird, oder durch vorgegebene Markierungen. Alternativ werden die in der Liste enthaltenen Adressen nach dem serverseitigen Empfang auf einer Webseite dargestellt, welche eine Bearbeitung der Adressen ermöglicht, die insbesondere die Markierung der Start- und Zieladresse umfasst.

Darüber hinaus kann es auch vorgesehen sein, dass der Nutzer für Zwischenstopps jeweils eine Aufenthaltsdauer spezifiziert. Dies kann durch eine Angabe einer Zeitdauer erfolgen, oder durch die Auswahl eines Zwischenstopptyps aus einer Mehrzahl vordefinierter Zwischenstopptypen, denen jeweils eine bestimmte Aufenthaltsdauer zugeordnet ist. Die Zwischenstopptypen können nutzerübergreifend vorgegeben werden. Dies ist insbesondere dann vorteilhaft, wenn der Webservice von bestimmten Nutzergruppen genutzt wird. Gleichfalls kann es jedoch auch vorgesehen sein, dass ein Nutzer selbst Zwischenstopptypen definiert, die innerhalb seines Benutzerkontos gespeichert werden. Die Angaben der Aufenthaltsdauern oder Zwischenstopptypen können in der zu dem Webserver 101 gesendeten Adressliste enthalten sein oder bei der nachträglichen Bearbeitung der Adressliste mittels der Webseite hinzugefügt werden.

Ein Beispiel für eine Nutzergruppe sind Zusteller, insbesondere Postzusteller, die Pakete und Päckchen im Auftrag eines Postunternehmens ausliefern. Für diese Nutzergruppe können beispielsweise die Zustellung eines Pakets oder Päckchens an eine Adresse, die Abholung eines Pakets oder Päckchens an einer Adresse oder die Auslieferung von Paketen und Päckchen in einer Filiale des Postunternehmens als Zwischenstopptypen vorgegeben werden.

In einer Ausführungsform kann zudem für jede Adresse die Angabe eines Zeitfensters ermöglicht werden, in dem die Adresse erreicht werden soll. Dies ist insbesondere dann vorteilhaft, wenn der Nutzer eine bestimmte Adresse zu einer bestimmten Zeit erreichen möchte, beispielsweise weil eine Lieferung zu dieser Zeit erfolgen soll. Ein Zeitfenster kann für eine oder mehrere Adressen der Adressliste angegeben werden. Zudem kann eine Startzeit angegeben werden, zu der eine Tour an der Startadresse begonnen werden soll. Die Angabe der Zeitfenster und der Startzeit kann in dem Dokument enthalten sein, das zu dem Server übertragen wird, oder bei einer nachträglichen Bearbeitung der Adressliste auf einer Webseite spezifiziert werden.

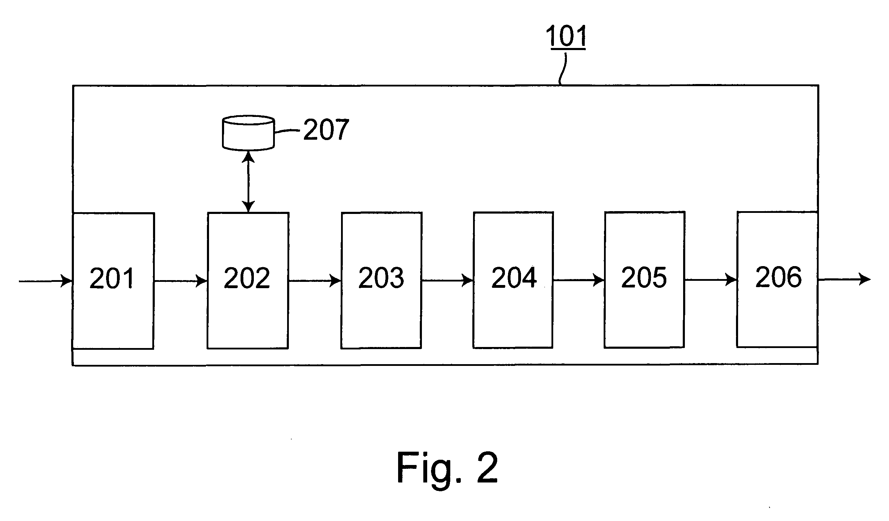

Verschiedene Komponenten des Webservers 101 sind in Figur 2 für eine beispielhafte Ausgestaltung schematisch dargestellt.

Die Empfangskomponente 201 ist dazu ausgestaltet, das von dem Endgerät 103 erhaltene Dokument auszuwerten und die enthaltenen Adressen sowie die gegebenenfalls den Adressen zugeordneten Angaben zu extrahieren. Dies umfasst eine Identifizierung der Bestandteile der Adresse sowie der zusätzlichen Angaben. Die Empfangskomponente 201 kann zudem die optional vorgesehene nachträgliche Bearbeitung der Adressen durch die Bereitstellung der entsprechenden Webseiten ermöglichen.

Nach der Bearbeitung der Adressliste in der Empfangskomponente 201 werden die Adressen einer Validierungskomponente 202 übergeben. Die Validierungskomponente 202 prüft, ob die angegebenen Adressen gültig sind und erlaubt gegebenenfalls eine Korrektur. Hierdurch wird sichergestellt, dass die angegebenen Adressen tatsächlich existieren und in einem späteren Schritt verortet werden können, d.h., dass den Adressen eine Geokoordinate zugeordnet werden kann. Zur Prüfung gleicht die Validierungskomponente 202 jede Adresse mit dem Inhalt einer Datenbank 207 ab, die gültige Adressen enthält. Sofern eine angegebene Adresse in der Datenbank 207 gefunden werden kann, wird diese als gültig markiert. Falls eine angegebene Adresse nicht in der Datenbank 207 enthalten ist, handelt es sich um eine ungültige Adresse.

Für eine ungültige Adresse kann die Validierungskomponente 202 eine Alternativadresse oder mehrere Alternativadressen ermitteln. Dabei können in den Alternativadressen insbesondere Schreibfehler korrigiert werden, in dem Adressen ermittelt werden, die einen vorgegebenen Grad an Ähnlichkeit mit den angegebenen Adressen aufweisen. Falls eine angegebene Adresse mehrdeutig ist, können alle übereinstimmenden Adressen als Alternativadresse ausgewählt werden.

Nach der Durchführung des Datenbankabgleichs werden die gültigen Adressen sowie Korrekturvorschläge für die ungültigen Adressen vorzugsweise auf einer weiteren Webseite angezeigt, die von der Validierungskomponente 202 erzeugt wird. Auf diese Webseite kann der Nutzer aus den ermittelten Alternativen für ungültige Adressen jeweils eine auswählen bzw. eine Auswahl bestätigen. Optional kann es auch vorgesehen sein, dass der Nutzer die als gültig markierten Adressen bestätigen muss. Die ausgewählten und bestätigten Adressen werden der weiteren Bearbeitung in dem Webserver 101 zugeführt. Nicht bestätigte Adressen werden in einer Ausgestaltung verworfen. Gleichfalls werden ungültige Adressen verworfen, für die keine Korrektur ermittelt werden konnten.

Von der Validierungskomponente 202 werden die Adressen an eine Geokodierungskomponente 203 übergeben. Die Geokodierungskomponente 203 ermittelt die zu den Adressen gehörenden Geokoordinaten. Diese beschreiben die Adresse in einem vorgegebenen Bezugssystem und umfassen beispielsweise die Angabe einer geographischen Länge und Breite. Vorzugsweise wird dasselbe Bezugssystem verwendet, welches auch dem Ortungssystem zugrunde liegt, das von dem Navigationsgerät 104 genutzt wird. Im Falle des GPS ist dies das Referenzellipsoid des WGS84 (Word Geodetic System 1984). Die zuvor in der Validierungskomponente 202 durchgeführte Validierung der Adressen stellt sicher, dass eine derartige Geokodierung für alle der Geokodierungskomponente 203 übergebenen Adressen möglich ist, wodurch ein fehlerfreier Prozessablauf gewährleistet wird.

Nach der Geokodierung werden die Navigationsziele einschließlich der angegebenen Adressen und der zugeordneten Geokoordinaten sowie gegebenenfalls der von dem Nutzer spezifizierten Angaben, wie die Aufenthaltsdauer an einem Zwischenziel und/oder das Zeitfenster für die Ankunft an dem Zwischenziel sowie die zugeordneten Namen, an eine Sequenzierungskomponente 204 übergeben. Diese ermittelt eine Reihenfolge der Zwischenziele, in der diese entlang einer optimalen Route nacheinander besucht werden können. Die Route beginnt an dem vom Nutzer vorgegebenen Startpunkt und endet an dem von dem Nutzer angegebenen Zielpunkt, wobei Start- und Zielpunkt identisch sein können. Zur Ermittlung der Reihenfolge werden die zuvor in der Geokodierungskomponente 203 ermittelten Geokoordinaten der Ziele verwendet, wodurch eine problemlose Berechnung der Reihenfolge möglich ist.

Die ermittelte Route ist optimal im Sinne eines Kriteriums, das fest vorgegeben oder von dem Nutzer ausgewählt werden kann. Insbesondere kann es sich entsprechend des Kriteriums beispielsweise um die kürzeste, schnellste oder wirtschaftlichste Route handeln. Die wirtschaftlichste Route kann beispielsweise eine möglichst kurze oder schnelle Route mit möglichst geringen Streckengebühren sein. Sofern Zeitfenster für die Ankunft an bestimmten Zwischenzielen vorgegeben sind, werden diese bei der Ermittlung der Reihenfolge als Nebenbedingungen berücksichtigt. Die Ermittlung der optimalen Route bzw. der Reihenfolge entspricht der Lösung eines so genannten Travelling-Salesman-Problems und kann anhand eines dem Fachmann an sich bekannten Algorithmus zur Lösung dieses Problems vorgenommen werden.

Wenn die Geschwindigkeit oder Zeit bei der Berechnung der Reihenfolge eine Rolle spielt, wie es bei der Ermittlung der schnellsten oder wirtschaftlichsten Route bzw. bei der Berücksichtigung von Zeitfenstern der Fall ist, werden Durchschnittsgeschwindigkeiten innerhalb des Wegenetzes berücksichtigt. Hierbei kann entweder eine von dem Nutzer angegebene Durchschnittsgeschwindigkeit herangezogen werden, oder es können Daten verwendet werden, die in der Sequenzierungskomponente 204 hinterlegt sind. Hierbei können auch für einzelne Wegsegmente individuelle Durchschnittsgeschwindigkeiten zugrunde gelegt werden. Bei der Berücksichtigung von Zeitfenstern werden zudem die von dem Nutzer angegebenen Aufenthaltszeiten an den Zwischenzielen bei der Berechnung herangezogen.

Das berücksichtigte Wegenetz hängt von der zugrunde gelegten Fortbewegungsart ab. In der Regel wird von einer Fortbewegung mit einem Kraftfahrzeug auszugehen sein, so dass das zu berücksichtigende Wegenetz dem Straßennetz entspricht. Gleichfalls kann allerdings auch vorgesehen sein, dass der Nutzer alternative Fortbewegungsarten angeben kann, so dass ein anderes Wegenetz zu berücksichtigen ist.

Ein Ergebnis der Verarbeitung der Navigationsziele in der Sequenzierungskomponente 204 ist eine sortierte Liste der Navigationsziele. Für jedes Zwischenziel und das Endziel wird vorzugsweise zudem eine geschätzte Ankunftszeit angegeben. Sofern die Ankunftszeiten nicht bereits bei der Berechnung der optimalen Route ermittelt worden sind, berechnet die Sequenzierungskomponente 204 die Ankunftszeiten nach der Ermittlung der optimalen Route. Hierzu werden die für die einzelnen Streckenabschnitte benötigten Zeiten anhand der Durchschnittsgeschwindigkeiten berechnet. Zusätzlich werden die angegebenen Aufenthaltsdauern an den Zwischenzielen herangezogen, um die Ankunftszeiten an den nachfolgenden Zwischenzielen zu ermitteln. Diese ergeben sich als Summe der vorangegangenen Fortbewegungszeiten, die anhand der Durchschnittsgeschwindigkeiten und der Streckenlängen ermittelt werden, und der Aufenthaltsdauern an den vorangegangenen Zwischenzielen. Falls der Nutzer zuvor eine Startzeit für den Beginn der Route am Startort vorgegeben hat, können die Ankunftszeiten absolute Zeitangaben umfassen. Wenn keine Startzeit spezifiziert worden ist, dann umfassen die Ankunftszeiten für die Navigationsziele jeweils eine Angabe der Zeitdauer vom Start der Route bis zum Erreichen des Ziels.

Nach der Sequenzierung können die Navigationsziele in der ermittelten Reihenfolge und unter Angabe der Ankunftszeiten auf einer Webseite aufgeführt werden, die von der Sequenzierungskomponente 204 erzeugt und am Endgerät 103 des Nutzers angezeigt wird. Die Navigationsziele werden auf der Webseite vorzugsweise unter Verwendung der postalischen Adressen und gegebenenfalls unter Angabe der zugehörigen Namen wiedergegeben und nicht anhand der Geokoordinaten, wodurch eine Identifizierung durch den Nutzer vereinfacht wird. Anhand der Webseite kann der Nutzer die ermittelte Reihenfolge begutachten. Optional kann der Webserver 101 auch eine Visualisierungskomponente 205 umfassen, die eine Webseite mit einer Kartenansicht erstellt, in der die ermittelte Route sowie die von der Route umfassten Navigationsziele kenntlich gemacht sind. Hierdurch wird die Beurteilung der Route für den Nutzer vereinfacht.

Nachdem der Nutzer die ermittelte Route auf einer Webseite bestätigt hat, werden die Routendaten einschließlich der Adressen und Geokoordinaten der Navigationsziele, der ermittelten Ankunftszeiten und vorzugsweise der von dem Nutzer angegebenen Aufenthaltszeiten an den Zwischenzielen bzw. den Zwischenstopptypen von der Ausgangskomponente 206 des Webservers 101 abgesendet. Vorzugsweise werden die Routendaten an eine elektronische Adresse gesendet, die von dem Nutzer auf einer für diesen Zweck bereitgestellten Webseite angegeben wird oder innerhalb des Benutzerkontos gespeichert ist. Zur Absendung werden die Routendaten in ein vorgegebenes Format konvertiert, welches das Einlesen in dem Navigationsgerät 104 ermöglicht. In einer Ausgestaltung handelt es sich dabei um ein XML-Format (XML: Extensible Markup Language).

Insbesondere können die Routendaten als E-Mail oder Anlage zu einer E-Mail an eine E-Mail-Adresse des Nutzers gesendet werden. Dies bedeutet, dass Daten von dem Webserver 101 über das Kommunikationsnetzwerk 102 zu einem Mailserver gesendet werden, in dem sie zunächst unter einem E-Mail-Konto gespeichert werden und später von dem Nutzer abgerufen werden können.

Die zuvor beschriebenen Komponenten 201-206 des Webservers 101 sind vorzugsweise als eigenständige Module ausgebildet. Die Übergabe von Daten von einer Komponente 201-206 zu einer anderen Komponente 201-206 erfolgt über eine fest definiert Schnittstelle, wodurch einzelne Komponenten 201-206 unabhängig voneinander verwendet, an veränderte Bedingungen angepasst und ausgetauscht werden können. Dies ermöglicht eine hohe Flexibilität bei der Konfiguration des Webservice. Ferner können einzelne Komponenten 201-206 mehrfach in unterschiedlichen Ausgestaltungen vorhanden sein. Hierdurch können beispielsweise in einfacher Weise unterschiedliche Dienstqualitäten angeboten werden. So können beispielsweise zwei Sequenzierungskomponenten 204 vorgesehen sein, wobei eine Sequenzierungskomponente dazu ausgestaltet ist, Zeitfenster für die Ankunft an Zwischenzielen bei der Routenberechnung zu berücksichtigen, während die andere Sequenzierungskomponente dies nicht gestattet. Je nachdem, ob Zeitfenster angegeben worden sind bzw. deren Berücksichtigung gewünscht ist, werden die Navigationsziele in dieser Ausgestaltung an eine der beiden Sequenzierungskomponenten übergeben.

Verschiedene Komponenten des Navigationsgeräts 104 im erfindungsgemäßen Verfahren beziehungsweise in der erfindungsgemäßen Vorrichtung sind in einer beispielhaften Ausgestaltung schematisch in einem Blockdiagramm in Figur 3 dargestellt. Bei dem Navigationsgerät 104 handelt es sich in einer Ausgestaltung um ein portables Gerät. Insbesondere kann es sich um ein Smartphone oder PDA mit Navigationsausrüstung handeln. Gleichfalls kann es sich jedoch auch um ein Navigationsgerät 104 handeln, welches etwa fest in ein Fahrzeug des Nutzers eingebaut ist. Die Navigationsausrüstung ist in einer dem Fachmann an sich bekannten Art ausgestaltet und weist eine Navigationskomponente 301 zur Routenführung auf. Die Navigationskomponente 301 umfasst eine Ortungseinheit 302 zur Bestimmung der Position des Navigationsgeräts 104 mittels des satellitengestützten Ortungssystems, sowie eine Routenplanungseinheit 303 zum Ermitteln einer optimalen Route zu einem vorgegebenen Zielort. Optimal ist die ermittelte Route wiederum im Sinne eines der zuvor bereits genannten Kriterien. Das anzuwendende Kriterium kann von dem Nutzer vorzugsweise ausgewählt werden. Die Routenplanungseinheit 303 greift auf Kartenmaterial zurück, das in dem Navigationsgerät 104 gespeichert ist. Ferner kann eine dynamische Routenplanung vorgenommen werden, die etwa Verkehrsstörungen berücksichtigt. Informationen über Verkehrsstörungen aus einer externen Quelle können über eine entsprechende Schnittstelle in dem Navigationsgerät 104 empfangen werden. Um den Nutzer entlang der ermittelten Route zu führen, werden von der Routenplanungseinheit 303 Navigationshinweise ermittelt und mittels einer Ausgabeeinrichtung des Navigationsgeräts 104 ausgegeben. Dabei kann eine optische und/oder akustische Ausgabe der Navigationshinweise vorgesehen sein. Die Navigationshinweise werden insbesondere an Wegkreuzungen ausgegeben, um dem Nutzer anzuzeigen, welcher Weg einzuschlagen ist, um den Zielort zu erreichen. Zusätzlich kann die Route auch auf einer Karte an einer Anzeigeeinrichtung des Navigationsgeräts 104 dargestellt werden.

Das Navigationsgerät 104 verfügt zudem über eine Schnittstelle zum Empfangen von externen Routendaten, insbesondere der in dem Webserver 101 ermittelten Routendaten. In einer Ausgestaltung besitzt das Navigationsgerät 104 eine Schnittstelle für den Zugriff auf das Kommunikationsnetzwerk 102, so dass die Routendaten über das Kommunikationsnetzwerk 102 übertragen werden können. Wenn die Routendaten von dem Webserver 101 als E-Mail an eine E-Mail-Adresse gesendet werden, dann kann das Navigationsgerät 104 beispielsweise zum Abrufen der E-Mail von dem entsprechenden E-Mail-Server ausgestaltet sein. Der Zugriff auf das Kommunikationsnetzwerk 102 kann dabei beispielsweise über ein Mobilfunknetzwerk erfolgen, mit dem das Navigationsgerät 104 verbunden werden kann. In einer alternativen Ausgestaltung können die Routendaten auch mittels eines weiteren Endgerät des Nutzers - beispielsweise dem Endgerät 103 - empfangen bzw. abgerufen werden und von diesem Endgerät zu dem Navigationsgerät 104 übertragen werden. Dies kann über eine geeignete drahtlose oder kabelgebundene Schnittstelle erfolgen, oder mithilfe eines Datenträgers, der in dem Endgerät beschrieben und in dem Navigationsgerät 104 ausgelesen wird.

In dem Navigationsgerät 104 wird das die Routendaten enthaltende Dokument von einer Eingangskomponenten 304 eingelesen und ausgewertet. Die Eingangskomponente 304 ist aufgrund des gewählten Formats in der Lage, die Routendaten einzeln zu extrahieren und innerhalb des Navigationsgeräts 104 temporär oder permanent zu speichern. Bei der Extraktion der Daten werden insbesondere die Angaben zu den Navigationszielen, d.h. vor allem die postalischen Adressen, die Geokoordinaten sowie die Angaben zu den Aufenthaltdauern und Ankunftszeiten und gegebenenfalls die den Adressen zugeordneten Namen identifiziert.

Um entlang der in dem Webserver 101 ermittelten Route zu navigieren, werden die Navigationsziele sukzessive von einer Steuerungskomponente 305 des Navigationsgeräts 104 an die Navigationskomponente 301 übergeben. Die an die Navigationskomponente 301 übergebenen Daten umfassen die in der Geokodierungskomponenten 203 des Webservers 101 ermittelten Geokoordinaten, welche dann von der Navigationskomponenten 301 zur Routenplanung herangezogen werden. Bei der Verwendung der Adressen anstelle der Geokoordinaten müssten die Adressen in der Navigationskomponente 301 unter Verwendung einer navigationsgeräteinternen Datenbasis geokodiert werden. Hierbei könnte es zu Problemen kommen, wenn die Datenbasis nicht vollständig bzw. nicht aktuell ist. Gegenüber der Verwendung der Adressen besteht daher der Vorteil, dass unabhängig von der Datenbasis des Navigationsgeräts 104 sichergestellt werden kann, dass die Navigationskomponente 301 zu den Navigationszielen navigieren kann. Ferner können die innerhalb des Navigationsgeräts 104 zur Geokodierung erforderlichen Komponenten grundsätzlich auch eingespart werden.

Nach dem Start der Routenführung durch den Nutzer am Startort übergibt die Steuerungskomponente 305 zunächst die Geokoordinaten des ersten Zwischenziels an die Navigationskomponente 301. Danach werden die Geokoordinaten weiterer Navigationsziele jeweils dann an die Navigationskomponente 301 übergeben, wenn das auf der Route vorangegangene Navigationsziel erreicht worden ist. Das Erreichen eines Navigationsziels wird hierzu von der Navigationskomponente 301 an die Steuerungskomponente 305 gemeldet. In einer Ausführungsform wird die Übergabe von Geokoordinaten eines Navigationsziels bzw. der Start der Routenführung durch den Nutzer an einer grafischen Benutzerschnittstelle bestätigt, die an der Anzeigeeinrichtung des Navigationsgeräts 104 dargestellt wird. Die Bedienung erfolgt über eine Eingabeeinrichtung des Navigationsgeräts 104. Zur Bestätigung der Übergabe der Geokoordinaten eines Navigationsziels an die Navigationskomponente 104 kann eine Eingabemöglichkeit durch die Steuerungskomponente erzeugt werden, im Falle der Bestätigung des Starts der Routenführung wird die Eingabemöglichkeit vorzugsweise von der Navigationskomponente 301 erzeugt.

Darüber hinaus kann der Nutzer vorzugsweise durch Bedienaktionen in die Routenführung eingreifen. Insbesondere besteht die Möglichkeit, die Routenführung zu einem Navigationsziel vorzeitig abzubrechen und die Routenführung zu einem nachfolgenden Navigationsziel vorzeitig zu starten. Hierdurch kann der Nutzer Navigationsziele in einfacher Weise überspringen, wenn er dies wünscht.

Die Steuerungskomponente 305 kann zudem eine grafische Benutzeroberfläche bereitstellen, die eine komfortable Bedienung des Navigationsgeräts 104 und die Implementierung zusätzlicher Funktionen ermöglicht. Auf der grafischen Benutzeroberfläche kann beispielsweise eine Übersicht über die in dem Webserver 101 ermittelte Route gegeben werden, insbesondere können die in der Route enthaltenen Navigationsziele der Reihenfolge nach in der grafischen Benutzeroberfläche dargestellt werden. Die Navigationsziele werden dabei vorzugsweise unter Angabe der Adresse und gegebenenfalls des Namens dargestellt, die eine leichtere Identifizierung durch den Nutzer ermöglichen als die Geokoordinaten. Dabei kann dem Nutzer auch die Möglichkeit gegeben werden, einzelne Navigationsziele zu entfernen und/oder Navigationsziele an von dem Nutzer bestimmten Positionen innerhalb der Reihenfolge einzufügen. Dies erlaubt eine flexible Anpassung der Route, während der Nutzer bereits unterwegs ist. Die grafische Benutzeroberfläche wird vorzugsweise beim Start des Navigationsgeräts 104 angezeigt und kann auch danach durch eine Bedienaktion des Nutzers jederzeit aufgerufen werden.

Die Eingangskomponente 304 sowie die Steuerungskomponente 305 sind vorzugsweise als Softwaremodule ausgestaltet, die in einem nicht-flüchtigen Speicher des Navigationsgeräts 104 gespeichert sind und auf einem Prozessor des Navigationsgeräts 104 ausgeführt werden. Die Übergabe der Geokoordinaten von der Steuerungskomponente 305 an die Navigationskomponente 301 erfolgt in einem vorgegebenen Format über eine entsprechende Schnittstelle der Navigationskomponente 301.

Eine derartige Ausgestaltung ermöglicht es, ein Navigationsgerät 104, welches bereits über die Navigationskomponente 301 verfügt, nachträglich mit der Eingangskomponente 304 und der Steuerungskomponente 305 nachzurüsten. Damit kann der Nutzer ein herkömmliches Navigationsgerät 104 durch die Installation entsprechender Software nutzen, um entlang einer in dem Webserver 101 berechneten Route zu navigieren, ohne die Navigationsziele manuell in das Navigationsgerät 104 eingeben zu müssen. Eine manuelle Eingabe wäre jedoch selbstverständlich ebenfalls möglich.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihrer Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Bereitstellen von Navigationsdaten für ein Navigationsgerät (104), umfassend die folgenden Schritte:
(a) Empfangen einer Mehrzahl von Adressdaten in einer zentralen Servereinrichtung (101) über ein Datennetzwerk (102),
(b) Ermitteln einer Reihenfolge von den Adressdaten entsprechenden Ortsdaten in der Servereinrichtung (101);
(c) Absenden eines Datensatzes, welcher die Ortsdaten unter Angabe der ermittelten Reihenfolge enthält, zur Übertragung an das Navigationsgerät (104),
**dadurch gekennzeichnet,**
**dass** die Reihenfolge derart ermittelt wird, dass eine Route, die an einem Startort beginnt, an einem Zielort endet und durch die Ortsdaten bestimmte Orte in der Reihenfolge enthält, ein vorgegebenes Kriterium erfüllt, wobei für die in der Route enthaltenen Orte zumindest teilweise eine Ankunftszeit bestimmt wird und bei der Ermittlung der Ankunftszeiten Aufenthaltsdauern an den auf der Route vorangegangenen Orten berücksichtigt werden, wobei die Aufenthaltsdauern von einem Nutzer vorgegeben werden und die Berechnung der Reihenfolge von den eingegebenen Aufenthaltsdauern abhängig gemacht wird.

2. Verfahren nach Anspruch 1, bei dem in den Adressdaten enthaltene Adressen mit gültigen Adressen verglichen werden, die in einer mit der Servereinrichtung (101) verbundenen Datenbank (207) gespeichert sind, und bei dem die den Adressdaten entsprechenden Ortsdaten Geokoordinaten der Adresse umfassen, wenn die Adresse gültig ist.

3. Verfahren nach Anspruch 1 oder 2, bei dem eine korrigierte Adresse bestimmt wird, wenn eine in den Adressdaten enthaltene Adresse nicht gültig ist, und bei dem die den Adressdaten entsprechenden Ortsdaten Geokoordinaten der korrigierten Adresse enthalten, vorzugsweise bei dem die Bestimmung der korrigierten Adresse eine Interaktion mit dem Nutzer umfasst, insbesondere eine Auswahl der korrigierten Adresse aus einer Mehrzahl von Adressen durch den Nutzer.

4. Verfahren nach einem der vorangegangenen Ansprüche, bei dem die Vorgabe der Aufenthaltsdauern durch eine Auswahl eines Zwischenstopptyps aus einer Mehrzahl vordefinierter Zwischenstopptyps erfolgt.

5. Verfahren nach einem der vorangegangenen Ansprüche, bei dem der Nutzer für eine oder mehrere Adressen eine Zeitfenster, in dem die Adresse erreicht werden soll, angeben kann.

6. Verfahren nach einem der vorangegangenen Ansprüche, bei dem der Datensatz von der Servereinrichtung (101) an eine von dem Nutzer angegebene elektronische Adresse gesendet wird.

7. Verfahren nach einem der vorangegangenen Ansprüche, bei dem eine Eingangskomponente (201 oder 304) des Navigationsgeräts (104) den Datensatz einliest und wenigstens die enthaltenen Ortsdaten extrahiert und die angegebene Reihenfolge der Ortsdaten ermittelt.

8. Verfahren nach einem der vorangegangenen Ansprüche, bei dem eine Steuerungskomponente (305) des Navigationsgeräts (104) die in dem Datensatz enthaltenen Ortsdaten sukzessive an eine Navigationskomponente (301) des Navigationsgeräts (104) übergibt, wobei die Navigationskomponente (301) jeweils eine Route zu dem durch die Ortsdaten festgelegten Ort bestimmt.

9. Verfahren nach einem der vorangegangenen Ansprüche, bei dem Ortsdaten eines Ortes an die Navigationskomponente (301) übergeben werden, nachdem der in der Reihenfolge vorangegangene Ort erreicht worden ist.

10. Vorrichtung zum Bereitstellen von Navigationsdaten für ein Navigationsgerät (104), umfassend:
(a) eine Empfangskomponente (201), die dazu ausgebildet ist, eine Mehrzahl von Adressdaten (101) über ein Datennetzwerk (102) zu empfangen,
(b) eine Sequenzierungskomponente (204), die dazu ausgebildet ist, eine Reihenfolge von den Adressdaten entsprechenden Ortsdaten zu ermitteln,
(c) eine Ausgangskomponente (206), die dazu ausgebildet ist, einen Datensatz zur Übertragung an das Navigationsgerät (104) abzusenden, wobei der Datensatz die Ortsdaten unter Angabe der ermittelten Reihenfolge enthält,
**dadurch gekennzeichnet,**
**dass** die Sequenzierungskomponente (204) dazu ausgebildet ist, die Reihenfolge von den Adressdaten entsprechenden Ortsdaten derart zu ermitteln, dass eine Route, die an einem Startort beginnt, an einem Zielort endet und durch die Ortsdaten bestimmte Orte in der Reihenfolge enthält, ein vorgegebenes Kriterium erfüllt, und die dazu ausgebildet ist, für die in der Route enthaltenen Orte zumindest teilweise eine geschätzte Ankunftszeit zu bestimmen und bei der Ermittlung der geschätzten Ankunftszeiten von einem Nutzer vorgegebene Aufenthaltsdauern an den auf der Route vorangegangenen Orten zu berücksichtigen, wobei die Berechnung der Reihenfolge von den eingegebenen Aufenthaltsdauern abhängig gemacht wird.

11. Vorrichtung nach Anspruch 10, weiterhin umfassend eine Validierungskomponente (202), die dazu ausgebildet ist, die in den Adressdaten enthaltene Adressen mit gültigen Adressen in einer Datenbank (207) zu vergleichen, sowie eine mit der Validierungskomponente (202) gekoppelte Geokodierungskomponente (203), die dazu ausgestaltet ist, Geokoordinaten einer Adresse als den Adressdaten entsprechende Ortsdaten zu bestimmen, wenn die Adresse gültig ist.

12. Vorrichtung nach Anspruch 10 oder 11, bei der die Validierungskomponente (202) dazu ausgebildet ist, eine korrigierte Adresse zu bestimmen, wenn eine in den Adressdaten enthaltene Adresse nicht gültig ist, und bei der die Geokodierungskomponente (203) dazu ausgestaltet ist, die Geokoordinaten einer Adresse als den Adressdaten entsprechende Ortsdaten zu bestimmen.

13. Vorrichtung nach einem der Ansprüche 10 bis 12, die zur Vorgabe der Aufenthaltsdauern durch eine Auswahl eines Zwischenstopptyps aus einer Mehrzahl vordefinierter Zwischenstopptyps ausgebildet ist

14. Navigationssystem zur Routenführung entlang einer Route mit Zwischenzielen umfassend eine Vorrichtung nach einem der Ansprüche 10 bis 13 und ein Navigationsgerät.

## Claims

1. A method for providing navigation data for a navigation device (104), comprising the following steps:
(a) receiving a plurality of address data in a central server unit (101) via a data network (102);
(b) determining a sequence of position data corresponding to the address data in the server unit (101);
(c) sending a data record that contains the position data, indicating the determined sequence, for transmission to the navigation device (104),
**characterized in that**
the sequence is determined in such a way that a route that starts at a starting point, that ends at a destination, and that encompasses certain places in the sequence determined on the basis of the position data meets a prescribed criterion, whereby an arrival time is determined, at least in part, for the places encompassed in the route, and, during the determination of the arrival times, the duration of the stops at the preceding places along the route is taken into account, whereby the duration of the stops is indicated by the user and the calculation of the sequence is made as a function of the entered duration of the stops.

2. The method according to claim 1, wherein addresses contained in the address data are compared to valid addresses that are stored in a database (207) associated with the server unit (101), and wherein the position data corresponding to the address data contain geo-coordinates of the address if the address is valid.

3. The method according to claim 1 or 2, wherein a corrected address is determined if an address contained in the address data is not valid, and wherein the position data corresponding to the address data contain geo-coordinates of the corrected address, preferably wherein the determination of the corrected address involves an interaction with the user, especially a selection by the user of the corrected address from a plurality of addresses.

4. The method according to one of the preceding claims, wherein the specification of the duration of the stops is carried out on the basis of a selection of a type of intermediate stop from a plurality of predefined types of intermediate stops.

5. The method according to one of the preceding claims, wherein the user can indicate a time window for one or more addresses within which the address should be reached.

6. The method according to one of the preceding claims, wherein the data record is sent from the server unit (101) to an electronic address indicated by the user.

7. The method according to one of the preceding claims, wherein an input component (201 or 304) of the navigation device (104) reads in the data record and extracts at least the contained position data and determines the indicated sequence of the position data.

8. The method according to one of the preceding claims, wherein a control component (305) of the navigation device (104) successively transfers the position data contained in the data record to a navigation component (301) of the navigation device (104), whereby the navigation component (301) determines a route to the place specified by the position data.

9. The method according to one of the preceding claims, wherein the position data of a place is transferred to the navigation component (301) after the preceding place in the sequence has been reached.

10. A device for providing navigation data for a navigation device (104), comprising:
(a) a receiving component (201) that is configured to receive a plurality of address data (101) via a data network (102);
(b) a sequencing component (204) that is configured to determine a sequence of position data corresponding to the address data;
(c) an output component (206) that is configured to send a data record for transmission to the navigation device (104), whereby the data record contains the position data, indicating the determined sequence,
**characterized in that**
the sequencing component (204) is configured to determine the sequence of position data corresponding to the address data in such a way that a route that starts at a starting point, that ends at a destination, and that encompasses certain places in the sequence determined by the position data fulfills a prescribed criterion, and it is configured to determine, at least in part, an estimated arrival time for the places encompassed in the route, and, during the determination of the estimated arrival times, to take into account the duration of the stops at the preceding places along the route as indicated by the user, whereby the calculation of the sequence is made as a function of the entered duration of the stops.

11. The device according to claim 10, also comprising a validation component (202) that is configured to compare the addresses contained in the address data to valid addresses in a database (207), and comprising a geo-encoding component (203) that is coupled to the validation component (202) and that is configured to determine geo-coordinates of an address as position data corresponding to the address data if the address is valid.

12. The device according to claim 10 or 11, wherein the validation component (202) is configured to determine a corrected address if an address contained in the address data is not valid, and wherein the geo-encoding component (203) is configured to determine the geo-coordinates of an address as position data corresponding to the address data.

13. The device according to one of claims 10 to 12, which is configured for the specification of the duration of the stops on the basis of a selection of a type of intermediate stop from a plurality of predefined types of intermediate stops.

14. A navigation system for route guidance along a route with intermediate destinations, comprising a device according to one of claims 10 to 13, as well as a navigation device.

## Revendications

1. Procédé pour fournir des données de navigation pour un instrument de navigation (104), comprenant les étapes suivantes :
(a) réception d'une pluralité de données d'adresses dans un dispositif serveur central (101) via un réseau de données (102) ;
(b) détermination d'une séquence de données de localisation, correspondant aux données d'adresses, dans le dispositif serveur (101) ;
(c) émission d'un jeu de données, qui contient les données de localisation avec mention de la séquence déterminée, pour transmission à l'instrument de navigation (104) ;
**caractérisé en ce que**
la séquence est déterminée de telle sorte qu'un itinéraire qui commence à un point de départ, se termine à un point d'arrivée et contient des localisations définies par les données de localisation, dans la séquence, remplit un critère prédéterminé, une heure d'arrivée étant définie au moins en partie pour les localisations contenues dans l'itinéraire et des durées de séjour aux localisations précédentes sur l'itinéraire étant prises en compte pour la détermination des heures d'arrivée, les durées de séjour étant prédéterminées par un utilisateur et le calcul de la séquence étant assujetti aux durées de séjour introduites.

2. Procédé selon la revendication 1, selon lequel des adresses contenues dans les données d'adresses sont comparées avec des adresses valables qui sont stockées dans une base de données (207) reliée au dispositif serveur (101) et selon lequel les données de localisation correspondant aux données d'adresses comprennent des géocoordonnées de l'adresse lorsque l'adresse est valable.

3. Procédé selon la revendication 1 ou 2, selon lequel une adresse corrigée est définie lorsqu'une adresse contenue dans les données d'adresses n'est pas valable, selon lequel les données de localisation correspondant aux données d'adresses comprennent des géocoordonnées de l'adresse corrigée, et selon lequel, préférentiellement, la définition de l'adresse corrigée inclut une interaction avec l'utilisateur, et plus particulièrement une sélection de l'adresse corrigée parmi une pluralité d'adresses par l'utilisateur.

4. Procédé selon l'une des revendications précédentes, selon lequel la spécification des durées de séjour est effectuée par une sélection d'un type d'arrêt intermédiaire parmi une pluralité de types d'arrêts intermédiaires prédéfinis.

5. Procédé selon l'une des revendications précédentes, selon lequel l'utilisateur peut indiquer, pour une ou plusieurs adresses, une fenêtre temporelle dans laquelle l'adresse doit être atteinte.

6. Procédé selon l'une des revendications précédentes, selon lequel le jeu de données est envoyé par le dispositif serveur (101) à une adresse électronique indiquée par l'utilisateur.

7. Procédé selon l'une des revendications précédentes, selon lequel un composant d'entrée (201 ou 304) de l'instrument de navigation (104) saisit le jeu de données et extrait au moins les données de localisation contenues et détermine la séquence des données de localisation indiquée.

8. Procédé selon l'une des revendications précédentes, selon lequel un composant de commande (305) de l'instrument de navigation (104) transfère les données de localisation contenues dans le jeu de données successivement à un composant de navigation (301) de l'instrument de navigation (104), le composant de navigation (301) définissant respectivement un itinéraire vers la localisation déterminée par les données de localisation.

9. Procédé selon l'une des revendications précédentes, selon lequel des données de localisation d'une localisation sont transférées au composant de navigation (301) après que la localisation précédente dans la séquence a été atteinte.

10. Dispositif pour fournir des données de navigation pour un instrument de navigation (104), comprenant :
(a) un composant de réception (201) qui est conçu pour recevoir une pluralité de données d'adresses (101) via un réseau de données (102) ;
(b) un composant de séquençage (204) qui est conçu pour déterminer une séquence de données de localisation correspondant aux données d'adresses (101) ;
(c) un composant de sortie (206) qui est conçu pour émettre un jeu de données pour transmission à l'instrument de navigation (104), le jeu de données contenant les données de localisation avec mention de la séquence déterminée,
**caractérisé en ce que**
le composant de séquençage (204) est conçu pour déterminer la séquence de données de localisation correspondant aux données d'adresses de telle sorte qu'un itinéraire qui commence à un point de départ, se termine à un point d'arrivée et contient des localisations définies par les données de localisation, dans la séquence, remplit un critère prédéterminé, et est conçu pour définir une heure d'arrivée estimée, au moins en partie, pour les localisations contenues dans l'itinéraire, et pour tenir compte, lors de la détermination des heures d'arrivée estimées, de durées de séjour, prédéterminées par un utilisateur, aux localisations précédentes sur l'itinéraire, le calcul de la séquence étant assujetti aux durées de séjour introduites.

11. Dispositif selon la revendication 10, comprenant en outre un composant de validation (202) qui est conçu pour comparer les adresses contenues dans les données d'adresses avec des adresses valables dans une base de données (207) ainsi qu'un composant de géocodage (203) couplé au composant de validation (202) et conçu pour définir des géocoordonnées d'une adresse en tant que données de localisation correspondant aux données d'adresses lorsque l'adresse est valable.

12. Dispositif selon la revendication 10 ou 11, selon lequel le composant de validation (202) est conçu pour définir une adresse corrigée lorsqu'une adresse contenue dans les données d'adresses n'est pas valable et selon lequel le composant de géocodage (203) est conçu pour définir les géocoordonnées d'une adresse en tant que données de localisation correspondant aux données d'adresses.

13. Dispositif selon l'une des revendications10 à 12, lequel est conçu pour spécifier les durées de séjour par une sélection d'un type d'arrêt intermédiaire parmi une pluralité de types d'arrêts intermédiaires prédéfinis.

14. Système de navigation pour guidage sur un itinéraire avec des destinations intermédiaires, comprenant un dispositif selon l'une des revendications 10 à 13 et un instrument de navigation.
